# EUROPEAN PATENT SPECIFICATION

(11) **EP 4 067 555 B1**
(45) Date of publication and mention of the grant of the patent: **17.07.2024**
(21) Application number: 20893741.7
(22) Date of filing: 29.10.2020
(51) Int. Cl.: D06F 58/02, D06F 58/22, B01D 46/10, B01D 46/24

(54) **LAUNDRY DRYING APPARATUS AND FILTERING DEVICE**
WÄSCHETROCKNER UND FILTERVORRICHTUNG
APPAREIL DE SÉCHAGE DE LINGE ET DISPOSITIF DE FILTRATION

(30) Priority: 26.11.2019 CN 201911177024; 26.11.2019 CN 201911175998
(43) Date of publication of application: 05.10.2022
(73) Proprietor: Qingdao Haier Drum Washing Machine Co., Ltd., Qingdao Shandong 266101 (CN); Haier Smart Home Co., Ltd., Qingdao, Shandong 266101 (CN)
(72) Inventor: LV, Peishi, Qingdao, Shandong 266101 (CN); LI, Quande, Qingdao, Shandong 266101 (CN); BING, Jindong, Qingdao, Shandong 266101 (CN); WANG, Jian, Qingdao, Shandong 266101 (CN); BATT, Geoff, Qingdao, Shandong 266101 (CN)
(74) Representative: Bauer, Dirk
(86) International application number: PCT/CN2020/124857
(87) International publication number: WO 2021/103918

(56) References cited:
- EP-A1- 0 045 288
- EP-A1- 2 745 909
- EP-A1- 3 246 455
- WO-A2-2010/071354
- CN-A- 1 133 074
- CN-A- 102 257 207
- CN-A- 102 653 918
- CN-U- 211 772 213
- CN-U- 211 772 214
- CN-U- 211 772 215
- CN-U- 211 772 216
- CN-U- 211 772 217
- CN-U- 211 772 218
- CN-U- 211 772 219
- CN-U- 211 772 220
- CN-U- 211 772 221
- CN-U- 211 772 222
- CN-U- 211 772 241
- CN-U- 211 772 242
- CN-U- 211 772 243
- CN-U- 211 972 832
- CN-U- 211 972 842
- GB-A- 2 295 667
- JP-A- H07 136 395
- US-A- 3 570 138
- US-A- 5 701 684

## Description

### FIELD OF THE INVENTION

The present invention belongs to the technical field of clothing drying, and specifically provides a clothing drying apparatus and a filter device.

### BACKGROUND OF THE INVENTION

A clothing drying apparatus is an apparatus that can dry clothing. Existing clothing drying apparatuses include a drum clothing dryer, a cabinet clothing dryer, a drawer clothing dryer, etc. When in use, the user puts the clothing to be dried into the clothing drying apparatus, and then starts a drying program of the clothing drying apparatus so that the clothing drying apparatus can complete drying of the clothing by itself.

In the prior art, taking the drum clothing dryer as an example, since lint arises in the process of drying the clothing, it is necessary to filter out and collect the lint. A traditional lint collection method is to provide a lint filter screen in an air duct of the drum clothing dryer so that the lint can be filtered out and collected by the lint filter screen. For example, US patent US5,701,684 discloses a rotating drum clothes drier having an annular lint filter. However, it is very inconvenient to clean the lint filter screen if it is provided in the air duct. Moreover, a filtering area of the lint filter screen is limited, a filtering effect is not good, and the lint filter screen will be full of the lint within a very short period, so the user has to clean the lint filter screen frequently, which greatly reduces the user experience in use. Another traditional lint collection method is to form a lint collecting cavity on a door glass of the drum clothing dryer. However, this lint collection method will result in a heavy weight of the door glass, which makes it convenient for the user to open and close the door. Moreover, it is impossible for the user to observe the drying situation of the clothing through the door glass, which is not advantageous for the user's use.

Accordingly, there is a need in the art for a new clothing drying apparatus to solve the above problem.

### SUMMARY OF THE INVENTION

In order to solve the above problem in the first background art, that is, to solve the problem that the way of filtering and collecting lint in existing clothing drying apparatuses is not good, which affects the user experience in use, the present invention provides a clothing drying apparatus as defined in the appended set of claims.

It can be understood by those skilled in the art that in the preferred technical solutions of the present invention, a filter device is arranged on a front-open clothing drying apparatus, and the filter device includes an annular filter member, a lint cleaning member and a lint collecting member; the annular filter member is arranged between the front support mechanism and the drying drum, the lint cleaning member and the lint collecting member are both arranged on the front support mechanism, and the annular filter member is arranged to be capable of rotating together with the drying drum; during the rotation of the annular filter member, the lint cleaning member can clean up the lint on the annular filter member, and the lint collecting member can collect the cleaned up lint. Through such an arrangement, the lint in the drying drum can be sufficiently filtered out by the annular filter member; moreover, the area of the annular filter member is large enough to improve the filtering effect, and the lint adhered to the annular filter member is cleaned into the lint collecting member under the action of the lint cleaning member to complete the operation of lint collection. The user does not need to clean the annular filter member frequently, which greatly improves the user experience in use; moreover, the lint cleaning member and the lint collecting member are both arranged on the front support mechanism, so they do not occupy other space and will not affect the normal use by the user.

Further, the annular filter member includes an annular filter bracket and an annular filter screen arranged on the annular filter bracket, the annular filter bracket is fixedly connected with the drying drum, and the annular filter bracket can rotate relative to the front support mechanism when driven by the drying drum. Through such an arrangement, it can be ensured that the annular filter screen can also rotate when the annular filter bracket is driven to rotate by the drying drum, so that the lint can be sufficiently filtered out by the annular filter screen, and the lint cleaning member can clean up the lint on the annular filter screen. The user does not need to clean the annular filter screen frequently, which greatly improves the user experience in use.

Further, the annular filter screen includes a plurality of arc-shaped filter screens, and the arc-shaped filter screens are sap-fit on the annular filter bracket. Through such an arrangement, detachment of the annular filter screen is facilitated, and the arc-shaped filter screens can be detached separately; on one hand, separate washing of the arc-shaped filter screens is facilitated, and on the other hand, when an arc-shaped filter screen is damaged, it is only necessary to replace this damaged arc-shaped filter screen alone, and there is no need to replace the entire annular filter screen, which simplifies the operation of maintenance personnel, reduces the maintenance cost of the user, and further improves the user experience in use.

Further, the annular cavity can communicate the interior of the drying drum with the air duct. When the air flows, the air in the drying drum flows toward the air duct while carrying the lint, and when the air passes through the annular cavity, the annular filter member can filter out the lint in the air. In this way, the lint can be sufficiently filtered out to ensure that the lint will not enter the air duct, thus avoiding the need for the user to frequently clean the air duct, and further improving the user experience in use.

Further, the lint cleaning member and the lint collecting member are both arranged on the installation frame, i.e., the installation frame provides support for the installation of the lint cleaning member and the lint collecting member simultaneously, thus guaranteeing the installation of the lint cleaning member and the lint collecting member, simplifying the structural design of the product and reducing the manufacturing cost of the product.

Further, the connecting rod is snap-fit on the installation frame, so that the scraper can be replaced in time when the scraper is damaged or a blade sharpness of the scraper is not good, and it is convenient for the user to perform the replacement operation, further improving the user experience in use.

Further, the lint collecting box is detachably connected with the installation frame, so that when the lint collecting box is filled with the lint collected, it is convenient for the user to quickly detach the lint collecting box, so as to clean the lint collecting box in time to further improve the user experience in use.

Further, a gripping structure is formed on an outer wall of a rear side of the lint collecting box. Through such an arrangement, it is impossible for the user to see the gripping structure from a front side of the clothing drying apparatus, thus improving the aesthetics of the clothing drying apparatus; moreover, the gripping structure enables the user to easily detach the lint collecting box when the user reaches his/her hand to the rear side of the lint collecting box through the clothing throw-in port, which makes it more convenient to detach the lint collecting box and further improves the user experience in use.

Further, the lint collecting port is arranged gradually opened in a direction approaching the lint cleaning member. Through such an arrangement, the lint on the annular filter member can enter the lint collecting box more easily when it is cleaned up by the lint cleaning member, which makes it convenient to collect the lint, improves the effect of lint collection, and further improves the user experience in use.

Further, the lint collecting member is located on a left portion or a right portion of the front support mechanism. Through such an arrangement, a vertical space of the clothing drying apparatus can be fully utilized, since the lint cleaned up by the lint cleaning member will move from top to bottom under the action of gravity. Therefore, arranging the lint collecting member on the left portion or the right portion of the front support mechanism can provide spatial support for designing the lint collecting member to be a structure that is thin and tall (that is, a width of the lint collecting member is narrow but a height is very large), so that a throw-in space of the clothing throw-in port will not be occupied, thus ensuring the smooth progress of clothing throw-in and ensuring the effect of lint collection.

### BRIEF DESCRIPTION OF THE DRAWINGS

A preferred embodiment of the first solution of the present invention will be described below with reference to the accompanying drawings and in connection with a drum clothing dryer, in which:
FIG. 1 is a first schematic view showing an overall structure of the drum clothing dryer of the first solution of the present invention;
FIG. 2 is a second schematic view showing the overall structure of the drum clothing dryer of the first solution of the present invention;
FIG. 3 is a partially enlarged view of FIG. 2;
FIG. 4 is a third schematic view showing the overall structure of the drum clothing dryer of the first solution of the present invention;
FIG. 5 is a fourth schematic view showing the overall structure of the drum clothing dryer of the first solution of the present invention;
FIG. 6 is a A-A sectional view of FIG. 5;
FIG. 7 is a partially enlarged view of FIG. 6;
FIG. 8 is a schematic view showing a partial structure of the drum clothing dryer of the first solution of the present disclosure;
FIG. 9 is a partially enlarged view of FIG. 8; and
FIG. 10 is an exploded view of the drum clothing dryer of the first solution of the present invention.

### Reference signs:

1: front panel; 2: front support mechanism; 21: first support member; 22: second support member; 221; annular support frame; 222; installation frame; 2221: side plate; 2222: front plate; 2223: bottom plate; 23: annular cavity; 3: annular filter member; 31: annular filter bracket; 32: annular filter screen; 321: arc-shaped filter screen; 4: drying drum; 51: connecting rod; 52: scraper; 53: installation strip; 54: opening; 6: lint collecting box; 61: gripping structure.

### DETAILED DESCRIPTION OF THE EMBODIMENT(S) OF THE INVENTION

First, it should be understood by those skilled in the art that these embodiments are only used to explain the technical principles of the present invention, and are not intended to limit the scope of protection of the present disclosure. For example, although the present disclosure is described in connection with a drum clothing dryer, the technical solutions of the present disclosure are obviously also applicable to other clothing drying apparatuses, such as a cabinet clothing dryer and a drawer clothing dryer. The adjustment and change to the application object do not constitute limitations to the present invention, and should all be defined within the scope of protection of the present disclosure.

It should be noted that in the description of the present disclosure, terms indicating directional or positional relationships, such as "center", "upper", "lower", "left", "right", "vertical", "bottom", "inner", "outer" and the like, are based on the directional or positional relationships shown in the accompanying drawings. They are only used for ease of description, and do not indicate or imply that the device or element must have a specific orientation, or be constructed or operated in a specific orientation, and therefore they should not be considered as limitations to the present disclosure. In addition, terms "first" and "second" are only used for descriptive purposes, and should not be interpreted as indicating or implying relative importance.

In addition, it should also be noted that in the description of the present disclosure, unless otherwise clearly specified and defined, terms "arrange", "install", "connect" and "connection" should be understood in a broad sense; for example, the connection may be a fixed connection, or may also be a detachable connection, or an integral connection; it may be a mechanical connection, or an electrical connection; it may be a direct connection, or an indirect connection implemented through an intermediate medium, or it may be internal communication between two elements. For those skilled in the art, the specific meaning of the above terms in the present disclosure can be interpreted according to specific situations.

In view of the problem pointed out in the "BACKGROUND OF THE INVENTION" that the way of filtering and collecting lint in existing drum clothing dryers is not good, which affects the user experience in use, the present disclosure provides a drum clothing dryer, aiming at improving the lint filtering effect of the drum clothing dryer; moreover, the user does not need to clean frequently, which greatly improves the user experience in use.

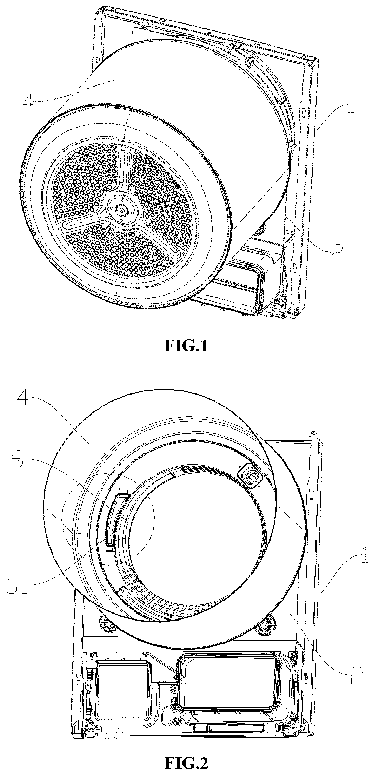

Specifically, as shown in FIGS. 1 to 3, the drum clothing dryer of the present disclosure includes a cabinet assembly, a drying drum 4 and a filter device; the cabinet assembly includes a cabinet and a front support mechanism 2, and the cabinet includes a front panel 1; the front support mechanism 2 is arranged on the front panel 1, and the front panel 1 is provided with a clothing throw-in port in communication with an interior of the drying drum 4; the filter device includes an annular filter member 3, a lint cleaning member and a lint collecting member; the annular filter member 3 is arranged between the front support mechanism 2 and the drying drum 4, the lint cleaning member and the lint collecting member are both arranged on the front support mechanism 2, and the annular filter member 3 is arranged to be capable of rotating together with the drying drum 4; during the rotation of the annular filter member 3, the lint cleaning member can clean up the lint on the annular filter member 3, and the lint collecting member can collect the cleaned up lint. When the drum clothing dryer adopts a single-cylinder structure, the drying drum 4 is the single cylinder, and the drying drum 4 can be directly connected with the annular filter member 3. When the drum clothing dryer adopts a dual-cylinder structure, the drying drum 4 is an inner one of the two cylinders, which is arranged in an outer cylinder. The inner cylinder is connected with a driving motor and rotates relative to the outer cylinder when driven by the driving motor. The inner cylinder can be directly connected with the annular filter member 3, and the inner cylinder drives the annular filter member 3 to rotate when the inner cylinder is rotating. In the present disclosure, the annular filter member 3 can adopt the structure of an annular filter screen, or can adopt the structure of the combination of an annular filter bracket and an annular filter screen. Those skilled in the art may flexibly set the specific structure of the annular filter member 3 in practical applications. The adjustment and change to the specific structure of the annular filter member 3 do not constitute limitations to the present disclosure, and they should all be defined within the scope of protection of the present disclosure. The lint cleaning member can adopt the structure of a scraper, or can adopt the structure of a brush, and those skilled in the art may flexibly set the specific structure of the lint cleaning member in practical applications. The adjustment and change to the specific structure of the lint cleaning member do not constitute limitations to the present disclosure, and they should all be defined within the scope of protection of the present disclosure. The lint collecting member can adopt the structure of a lint collecting box, or can adopt the structure of a lint collecting groove. Those skilled in the art can flexibly set the specific structure of the lint collecting member in practical applications. The adjustment and change to the specific structure of the lint collecting member do not constitute limitations to the present disclosure, and they should all be defined within the scope of protection of the present disclosure.

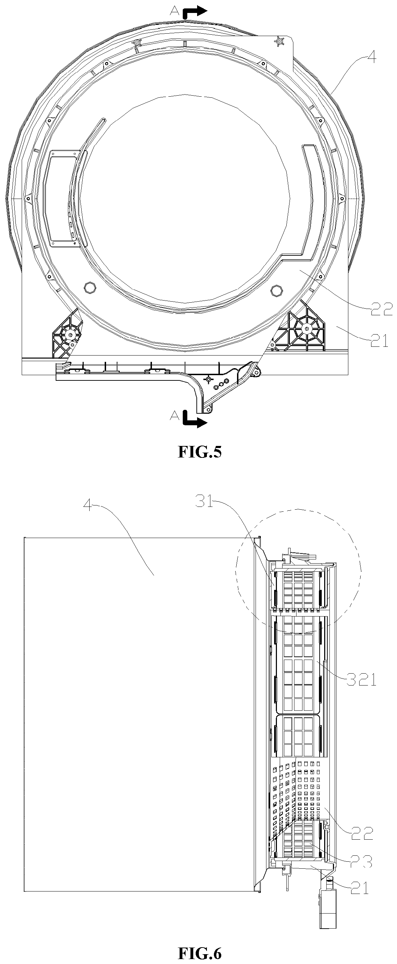

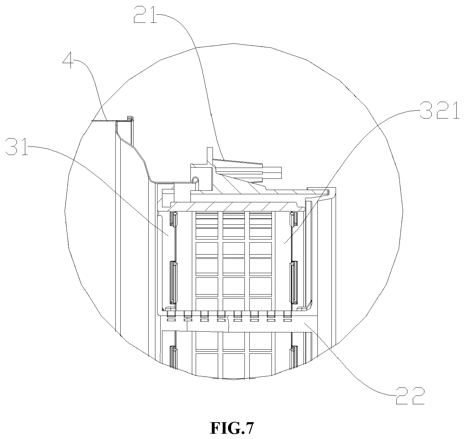

Preferably, as shown in FIGS. 6 to 10, the annular filter member 3 includes an annular filter bracket 31 and an annular filter screen 32 arranged on the annular filter bracket 31. The annular filter bracket 31 is fixedly connected with the drying drum 4, and the annular filter bracket 31 can rotate relative to the front support mechanism 2 when driven by the drying drum 4. The annular filter bracket 31 can be connected with the drying drum 4 by threads, snap-fit and/or bonding, etc., and those skilled in the art can flexibly set the connection means between the annular filter bracket 31 and the drying drum 4 in practical applications. The annular filter bracket 31 can be slidably connected with the front support mechanism 2, so that the annular filter bracket 31 can rotate relative to the front support mechanism 2 when driven by the drying drum 4. Of course, the annular filter bracket 31 can also be in no contact with the front support mechanism 2, so that the annular filter bracket 31 can rotate relative to the front support mechanism 2 when driven by the drying drum 4. The annular filter screen 32 can be integrated with the annular filter bracket 31 or detachably connected with the annular filter bracket 31. Of course, preferably, the annular filter screen 32 is detachably connected with the annular filter bracket 31, so as to facilitate the user to detach the annular filter screen 32 from the annular filter bracket 31. In a more preferred situation, as shown in FIGS. 6 and 7, the annular filter screen 32 includes a plurality of arc-shaped filter screens 321, and the arc-shaped filter screens 321 are snap-fit on the annular filter bracket 31. The plurality of arc-shaped filter screens 321 together form the annular filter screen 32, and the number of the arc-shaped filter screens 321 may be 2, 3, 4 or more. In addition, arc lengths of all the arc-shaped filter screens 321 may be set such that all of them are equal to each other, or none of them is equal to each other, or some of them are equal to each other and some of them are not equal to each other. Those skilled in the art can flexibly set the number and size of the arc-shaped filter screens 321 in practical applications. The adjustment and change to the number and size of the arc-shaped filter screens 321 do not constitute limitations to the present disclosure, and they should all be defined within the scope of protection of the present disclosure. The snap-fit of the arc-shaped filter screens 321 and the annular filter bracket 31 may be implemented by clasps, claws or ribs. In the structure shown in the figure, the annular filter bracket 31 is formed with an annular groove, and a plurality of snap-fit ribs are arranged on an edge of the annular groove. The plurality of snap-fit ribs enable the arc-shaped filter screens 321 to be snap-fit in the annular groove. Those skilled in the art can flexibly set the snap-fit means between the arc-shaped filter screens 321 and the annular filter bracket 31 in practical applications. The adjustment and change to the snap-fit means between the arc-shaped filter screens 321 and the annular filter bracket 31 do not constitute limitations to the present disclosure, and they should all be defined within the scope of protection of the present disclosure.

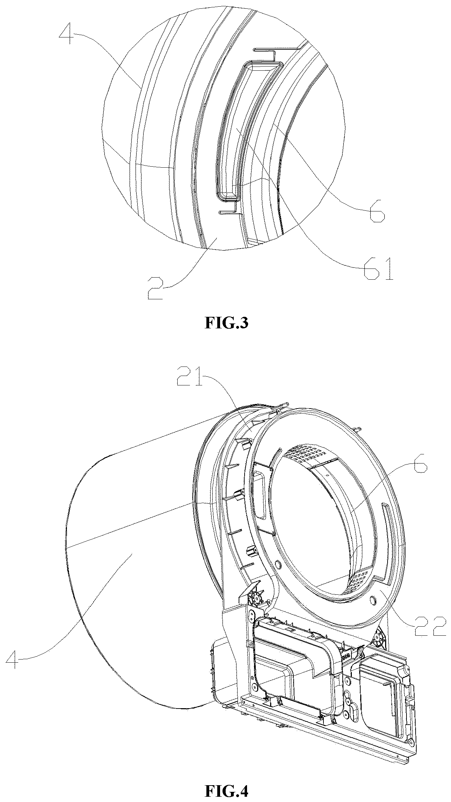

Preferably, as shown in FIGS. 4 to 7 and 10, the front support mechanism 2 includes a first support member 21 and a second support member 22 that are connected. At least one of the first support member 21 and the second support member 22 is arranged on the front panel 1, the lint cleaning member and the lint collecting member are both arranged on the second support member 22, and the first support member 21 and the second support member 22 together form an annular cavity 23 that communicates the air duct of the clothing drying apparatus with the interior of the drying drum 4; the annular filter member 3 is connected with the drying drum 4, and at least a part of the annular filter member 3 is arranged inside the annular cavity 23. The first support member 21 may be separately arranged on the front panel 1, or the second support member 22 may be separately arranged on the front panel 1, or the first support member 21 and the second support member 22 may be simultaneously arranged on the front panel 1. The first support member 21 and the second support member 22 can be connected by threads, snap-fit and/or bonding, etc., and those skilled in the art can flexibly set the connection means between the first support member 21 and the second support member 22 in practical applications. The first support member 21 and the second support member 22 may be structures such as a support plate, a support frame or a support rib. Those skilled in the art can flexibly set the specific structures of the first support member 21 and the second support member 22 in practical applications. The technical solution of the present disclosure will be further described below in an example in which the first support member 21 is separately arranged on the front panel 1.

In the above, the annular filter member 3 can be completely arranged inside the annular cavity 23, or can also be partially arranged inside the annular cavity 23. When the drum clothing dryer dries the clothing, a fan in the air duct operates, so that air in the drying drum 4 is directed to the air duct. The air will flow through the annular cavity 23, and the lint in the air will be filtered out by the annular filter member 3 at this time, so as to achieve the purpose of removing the lint in the air. The lint cleaning member and the lint collecting member can be integrated with the second support member 22, or they can be detachably connected with the second support member 22. Of course, preferably, the lint cleaning member and the lint collecting member are both detachably connected with the second support member 22 to facilitate inspection, replacement and maintenance of the lint cleaning member and facilitate cleaning, replacement and maintenance of the lint collecting member. Those skilled in the art can flexibly set the specific connection means of the lint cleaning member and the lint collecting member with the second support member 22 in practical applications.

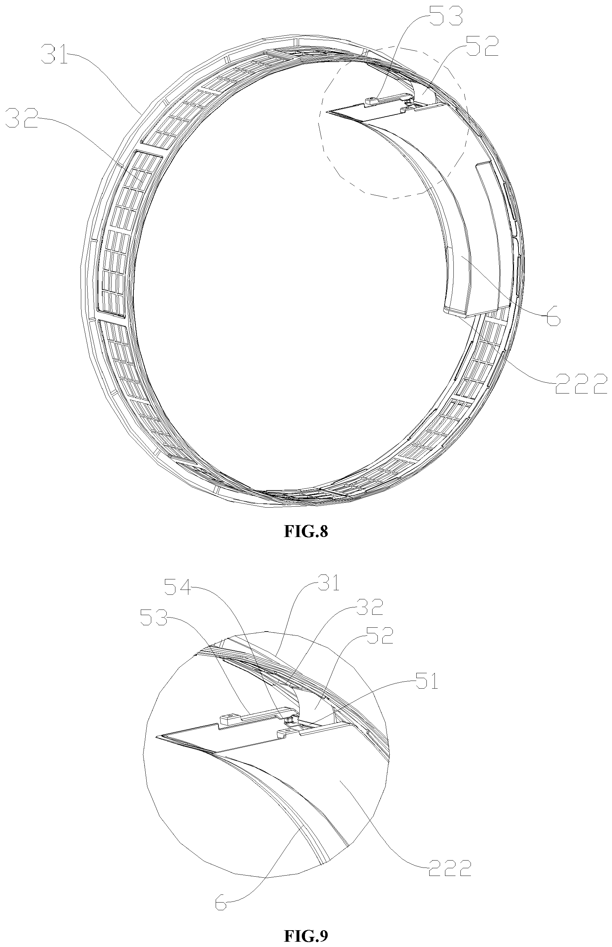

Preferably, as shown in FIGS. 8 to 10, the second support member 22 includes an annular support frame 221 that is connected with the first support member 21, and an installation frame 222 that is arranged on the annular support frame 221. The lint cleaning member and the lint collecting member are both arranged on the installation frame 222. The annular support frame 221 can be connected with the first support member 21 by threads, snap-fit and/or bonding, etc., and the installation frame 222 can be connected with the annular support frame 221 by threads, snap-fit and/or bonding, etc. Those skilled in the art can flexibly set the specific connection means of the annular support frame 221 and the first support member 21, as well as the specific connection means of the installation frame 222 and the annular support frame 221 in practical applications. The installation frame 222 may be configured as a box-like structure or a groove-like structure, etc., and those skilled in the art can flexibly set the specific structure and shape of the installation frame 222 in practical applications. In addition, the lint cleaning member and the lint collecting member can be integrated with the installation frame 222, or they can be detachably connected with the installation frame 222. Of course, preferably, the lint cleaning member and the lint collecting member are both detachably connected with the installation frame 222 to facilitate inspection, replacement and maintenance of the lint cleaning member and facilitate cleaning, replacement and maintenance of the lint collecting member. Those skilled in the art can flexibly set the specific connection means of the lint cleaning member and the lint collecting member with the installation frame 222 in practical applications.

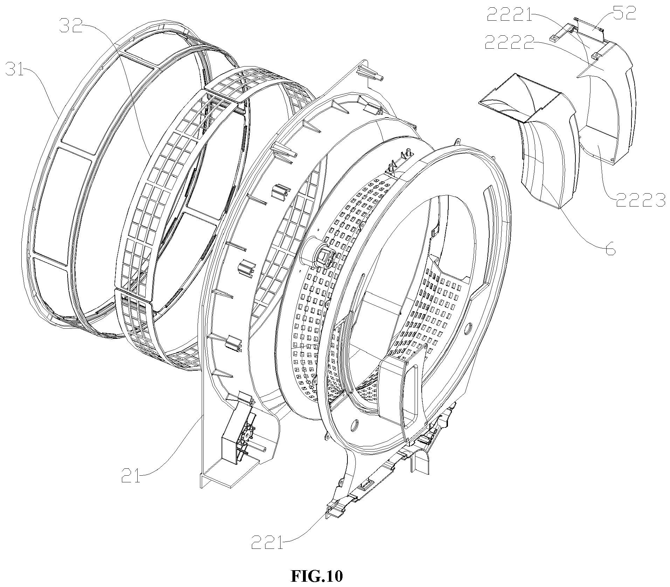

In a possible situation, as shown in FIG. 10, the installation frame 222 includes a side plate 2221, a front plate 2222 and a bottom plate 2223. A side edge of the side plate 2221 is connected with a side edge of the front plate 2222. A bottom edge of the side plate 2221 and a bottom edge of the front plate 2222 are respectively connected with two side edges of the front plate 2222. The side plate 2221, the front plate 2222 and the bottom plate 2223 form a covering space with three sides enclosed, which is used for the accommodation and snap-fit of the lint cleaning member. The front plate 2222 is provided with an elongated recess, and the annular support frame 221 is provided with an elongated protrusion that matches with the elongated recess. When the assembly is completed, the elongated protrusion matches with the elongated recess to position the front plate 2222, thus positioning the installation frame 222.

Preferably, as shown in FIGS. 8 to 10, the lint cleaning member includes a connecting rod 51 and a scraper 52 that are connected, in which the connecting rod 51 is snap-fit on the installation frame 222, and the scraper 52 is arranged close to or against the annular filter member 3. The connecting rod 51 and the scraper 52 can be integrated into one piece, or can be detachably connected (such as by snap-fit, threads and/or bonding, etc.). The connecting rod 51 can be connected to the installation frame 222 through a clasp, or can be connected to the installation frame 222 through a hook, or can also be connected to the installation frame 222 through a claw. Those skilled in the art can flexibly set the specific snap-fit means of the connecting rod 51 and the installation frame 222 in practical applications. In a possible situation, still taking the above structure of the installation frame 222 including the side plate 2221, the front plate 2222 and the bottom plate 2223 as an example, two installation strips 53 that are threaded with the annular support frame 221 protrude from the side plate 2221, and the installation strips 53 are formed with openings 54. Two ends of the connecting rod 51 are snap-fit into the openings 54 of the two installation strips 53 respectively. The scraper 52 can be arranged against the annular filter member 3, or can also be arranged close to the annular filter member 3 (that is, there is a gap between the scraper 52 and the annular filter member 3). It should be noted that when the scraper 52 is arranged to have a gap with the annular filter member 3, it is necessary to ensure that the spacing between the scraper 52 and the annular filter member 3 enables the scraper 52 to scrape off the lint on the annular filter member 3. When the annular filter member 3 includes the annular filter bracket 31 and the annular filter screen 32 arranged on the annular filter bracket 31, the scraper 52 is arranged close to or against the annular filter screen 32.

Preferably, as shown in FIG. 2, the lint collecting member includes a lint collecting box 6 which is detachably connected with the installation frame 222, at least a part of the lint collecting box 6 is arranged inside the annular cavity 23, and a lint collecting port of the lint collecting box 6 is located below the lint cleaning member. The lint collecting box 6 and the installation frame 222 can be connected by threads, snap-fit and/or bonding, etc., and those skilled in the art can flexibly set the specific connection means of the lint collecting box 6 and the installation frame 222 in practical applications. The lint collecting box 6 can be completely arranged inside the annular cavity 23, or can be partially arranged inside the annular cavity 23. In practical applications, the lint collecting box 6 is preferably completely arranged inside the annular cavity 23. Through such an arrangement, the lint collecting box 6 can be hidden in the front support mechanism 2, and the user cannot observe the lint collecting box 6 from the outer side of the clothing throw-in port, which improves the overall aesthetics of the drum clothing dryer; in addition, the user is also prevented from scraping against the lint collecting box 6 when throwing the clothing, thus avoiding damage to the clothing. The lint collecting port of the lint collecting box 6 is located below the lint cleaning member, and through such an arrangement, the lint scraped off the annular filter member 3 by the lint cleaning member can directly fall into the lint collecting box 6. For example, taking the above structure of the lint cleaning member including the connecting rod 51 and the scraper 52 and the annular filter member 3 including the annular filter bracket 31 and the annular filter screen 32 as an example, in the process of the drying drum 4 driving the annular filter bracket 31 to rotate, the annular filter screen 32 also rotates, and the scraper 52 scrapes off the lint on the annular filter screen 32. The lint enters the lint collecting box 6 through the lint collecting port under the action of its own gravity.

Preferably, as shown in FIGS. 2 and 3, a gripping structure 61 is formed on an outer wall of a rear side of the lint collecting box 6. The purpose of providing the gripping structure 61 is to enable the user to detach the lint collecting box 6 more smoothly by operating the gripping structure 61. The gripping structure 61 may be a recess formed on the outer wall of the rear side of the lint collecting box 6. Of course, the gripping structure 61 may also be a handle formed on the outer wall of the rear side of the lint collecting box 6, and those skilled in the art can flexibly set the specific structural form of the gripping structure 61 in practical applications. In addition, the advantage of arranging the gripping structure 61 on the outer wall of the rear side of the lint collecting box 6 is that the user cannot observe the gripping structure 61 from the outer side of the clothing throw-in port. In practical applications, the user can reach his/her hand to the rear side of the lint collecting box 6, and then operate the gripping structure 61 to detach the lint collecting box 6 from the installation frame 222, so that the user's operation is also facilitated on the basis of improving the aesthetics.

Preferably, as shown in FIGS. 8 to 10, the lint collecting port is arranged gradually opened in a direction approaching the lint cleaning member. Through such an arrangement, the lint cleaned up by the lint cleaning member can enter the lint collecting box 6 more easily. When the lint cleaning member adopts the above structure of the combination of the connecting rod 51 and the scraper 52, the lint collecting port is arranged gradually opened in a direction approaching the scraper 52, that is, the lint collecting port is arranged gradually narrowed in the moving and collecting direction of the lint. Those skilled in the art can flexibly set the opening area and opening angle of the lint collecting port in practical applications, as long as it can be ensured that the lint cleaned up by the scraper 52 can enter the lint collecting box 6.

Preferably, as shown in FIGS. 2 to 4 and 10, the lint collecting member is located on a left or right portion of the front support mechanism 2. In practical applications, a front side of the front support mechanism 2 is close to a door hinge and a door lock on the front panel 1. Since a volume of the door lock is large and a volume of the door hinge is small, the lint collecting member can be arranged on a side close to the door hinge. For example, when the door lock is on the left side of the clothing throw-in port of the front panel 1 and the door hinge is on the right side, it is preferable to arrange the lint collecting member on the right side of the front support mechanism 2; and when the door lock is on the right side of the clothing throw-in port of the front panel 1 and the door hinge is on the left side, it is preferable to arrange the lint collecting member on the left side of the front support mechanism 2. Through such an arrangement, it is convenient to provide an installation space of the door lock on the front panel 1, thus avoiding interference with the lint collecting member and avoiding affecting the overall arrangement of the drum clothing dryer. In addition, since the lint scraped off by the lint cleaning member will move from top to bottom under the action of its own gravity, arranging the lint collecting member on the left or right portion of the front support mechanism 2 can make full use of the vertical space of the drum clothing dryer, that is, the width of the lint collecting member can be set to be narrow and the height of the lint collecting member can be set to be relatively large on the basis of not occupying the space of the clothing throw-in port as much as possible, thus forming a "thin and tall" structure, so as to make use of the height space of the lint collecting member to accommodate more lint. As compared with a situation in which the lint collecting member is arranged on an upper portion of the front support mechanism 2 so that the lint collecting member can only be arranged as a "flat and long" structure, arranging the lint collecting member on the left or right portion of the front support mechanism 2 can greatly improve the effect of lint collection. In addition, in the present disclosure, the air duct can be located at the bottom of the front support mechanism 2. For example, if the front support mechanism 2 adopts the above structure of the combination of the first support member 21 and the second support member 22, the air duct can be communicated with the bottom of the annular cavity 23. At the same time, the second support member 22 is provided with a through hole structure which communicates the annular cavity 23 with the interior of the drying drum 4. Of course, the air duct can also be located at other positions of the front support mechanism 2, such as on the left or right portion of the front support mechanism 2. Those skilled in the art can flexibly set the specific arrangement position of the air duct in practical applications. The adjustment and change to the specific arrangement position of the air duct do not constitute limitations of the present disclosure, and they should all be defined within the scope of protection of the present disclosure.

## Claims

1. A clothing drying apparatus, comprising a cabinet assembly, a drying drum (4) and a filter device; wherein the cabinet assembly comprises a front panel (1) and a front support mechanism (2), the front support mechanism (2) is arranged on the front panel (1), and the front panel (1) is provided with a clothing throw-in port in communication with an interior of the drying drum (1);
the filter device comprises an annular filter member (3), a lint cleaning member and a lint collecting member; the annular filter member (3) is arranged between the front support mechanism (2) and the drying drum (4), the lint cleaning member and the lint collecting member are both arranged on the front support mechanism (2), and the annular filter member (3) is arranged to be capable of rotating together with the drying drum (4); and
during the rotation of the annular filter member (3), the lint cleaning member can clean up the lint on the annular filter member (3), and the lint collecting member can collect the cleaned up lint,
**characterized in that** the front support mechanism (2) comprises a first support member (21) and a second support member (22) that are connected, at least one of the first support member and the second support member is arranged on the front panel (1), and the lint cleaning member and the lint collecting member are both arranged on the second support member (22); and wherein the first support member (21) and the second support member (22) together form an annular cavity (23) that communicates an air duct of the clothing drying apparatus with the interior of the drying drum (4); the annular filter member (3) is connected with the drying drum (4), and at least a part of the annular filter member (3) is arranged inside the annular cavity (23).

2. The clothing drying apparatus according to claim 1, wherein the annular filter member (3) comprises an annular filter bracket (31) and an annular filter screen (32) arranged on the annular filter bracket (31), the annular filter bracket (31) is fixedly connected with the drying drum (4), and the annular filter bracket (31) can rotate relative to the front support mechanism (2) when driven by the drying drum (4).

3. The clothing drying apparatus according to claim 2, wherein the annular filter screen (32) comprises a plurality of arc-shaped filter screens (321), and the arc-shaped filter screens (321) are snap-fit on the annular filter bracket (31).

4. The clothing drying apparatus according to claim 1, wherein the second support member (22) comprises an annular support frame (221) connected with the first support member (21) and an installation frame (222) arranged on the annular support frame (221), and the lint cleaning member and the lint collecting member are both arranged on the installation frame (222).

5. The clothing drying apparatus according to claim 4, wherein the lint cleaning member comprises a connecting rod (51) and a scraper (52) that are connected, the connecting rod (51) is snap-fit on the installation frame (222), and the scraper (52) is arranged close to or against the annular filter member (3).

6. The clothing drying apparatus according to claim 4, wherein the lint collecting member comprises a lint collecting box (6) which is detachably connected with the installation frame (222), at least a part of the lint collecting box (6) is arranged inside the annular cavity (23), and a lint collecting port of the lint collecting box (6) is located below the lint cleaning member.

7. The clothing drying apparatus according to claim 6, wherein a gripping structure (61) is formed on an outer wall of a rear side of the lint collecting box (6).

8. The clothing drying apparatus according to claim 6, wherein the lint collecting port is arranged gradually opened in a direction approaching the lint cleaning member.

9. The clothing drying apparatus according to any one of claims 1 to 8, wherein the lint collecting member is located on a left portion or a right portion of the front support mechanism (2).

## Patentansprüche

1. Wäschetrocknergerät, das eine Schrankkonstruktion, eine Trockentrommel (4) und eine Filtervorrichtung aufweist; wobei die Schrankkonstruktion eine Vorderplatte (1) und einen vorderen Trägermechanismus (2) aufweist, wobei der vordere Trägermechanismus (2) auf der Vorderplatte (1) angeordnet ist und die Vorderplatte (1) mit einer Öffnung zum Hineinwerfen von Wäsche in Verbindung mit einem Innenraum der Trockentrommel (1) versehen ist;
die Filtervorrichtung weist ein ringförmiges Filterelement (3), ein Flusenreinigungselement und ein Flusensammelelement auf; wobei das ringförmige Filterelement (3) zwischen dem vorderen Trägermechanismus (2) und der Trockentrommel (4) angeordnet ist, das Flusenreinigungselement und das Flusensammelelement beide an dem vorderen Trägermechanismus (2) angeordnet sind und das ringförmige Filterelement (3) derart angeordnet ist, dass es in der Lage ist, sich zusammen mit der Trockentrommel (4) zu drehen; und
bei Drehung des ringförmigen Filterelements (3) kann das Flusenreinigungselement die Flusen auf dem ringförmigen Filterelement (3) entfernen und das Flusensammelelement kann die entfernten Flusen sammeln,
**dadurch gekennzeichnet, dass** der vordere Trägermechanismus (2) ein erstes Trägerelement (21) und ein zweites Trägerelement (22) aufweist, die miteinander verbunden sind, wobei mindestens eines des ersten Trägerelements und des zweiten Trägerelements auf der Vorderplatte (1) angeordnet ist und das Flusenreinigungselement und das Flusensammelelement beide auf dem zweiten Trägerelement (22) angeordnet sind; und wobei das erste Trägerelement (21) und das zweite Trägerelement (22) zusammen einen ringförmigen Hohlraum (23) bilden, der einen Lufteinlass des Wäschetrocknergeräts mit dem Innenraum der Trockentrommel (4) verbindet; das ringförmige Filterelement (3) mit der Trockentrommel (4) verbunden ist und zumindest ein Teil des ringförmigen Filterelements (3) innerhalb des ringförmigen Hohlraums (23) angeordnet ist.

2. Wäschetrocknergerät nach Anspruch 1, wobei das ringförmige Filterelement (3) eine ringförmige Filterhalterung (31) und ein ringförmiges Filtersieb (32), das auf der ringförmigen Filterhalterung (31) angeordnet ist, aufweist, wobei die ringförmige Filterhalterung (31) fest mit der Trockentrommel (4) verbunden ist und sich die ringförmige Filterhalterung (31) bei Antrieb durch die Trockentrommel (4) bezüglich des vorderen Trägermechanismus (2) drehen kann.

3. Wäschetrocknergerät nach Anspruch 2, wobei das ringförmige Filtersieb (32) eine Vielzahl an bogenförmigen Filtersieben (321) aufweist und die bogenförmigen Filtersiebe (321) mit einer Schnappverbindung auf der ringförmigen Filterhalterung (31) befestigt werden.

4. Gerätetrocknergerät nach Anspruch 1, wobei das zweite Trägerelement (22) einen ringförmigen Trägerrahmen (221), der mit dem ersten Trägerelement (21) verbunden ist, und einen Montagerahmen (222), der auf dem ringförmigen Trägerrahmen (221) angeordnet ist, aufweist und das Flusenreinigungselement und das Flusensammelelement beide auf dem Montagerahmen (222) angeordnet sind.

5. Wäschetrocknergerät nach Anspruch 4, wobei das Flusenreinigungselement eine Verbindungsstange (51) und einen Schaber (52) aufweist, die miteinander verbunden sind, wobei die Verbindungsstange (51) mit einem Schnappverschluss auf dem Montagerahmen (222) befestigt ist und der Schaber (52) nahe oder anliegend an dem ringförmigen Filterelement (3) angeordnet ist.

6. Wäschetrocknergerät nach Anspruch 4, wobei das Flusensammelelement eine Flusensammelbox (6), die entfernbar mit dem Montagerahmen (222) verbunden ist, aufweist, wobei zumindest ein Teil der Flusensammelbox (6) innerhalb des ringförmigen Hohlraums (23) angeordnet ist und sich eine Flusensammelöffnung der Flusensammelbox (6) unterhalb des Flusenreinigungselements befindet.

7. Wäschetrocknergerät nach Anspruch 6, wobei eine Griffkonstruktion (61) auf einer Außenwand einer Rückseite der Flusensammelbox (6) gebildet ist.

8. Wäschetrocknergerät nach Anspruch 6, wobei die Flussensammelöffnung derart angeordnet ist, dass sie sich graduell in eine Richtung zu dem Flusenreinigungselement hin öffnet.

9. Wäschetrocknergerät nach einem beliebigen der Ansprüche 1 bis 8, wobei sich das Flusensammelelement an einem linken Teil oder einem rechten Teil des vorderen Trägermechanismus (2) befindet.

## Revendications

1. Appareil de séchage de vêtements, comprenant un ensemble d'armoire, un tambour de séchage (4) et un dispositif de filtrage ; dans lequel l'ensemble d'armoire comprend un panneau avant (1) et un mécanisme de support avant (2), le mécanisme de support avant (2) est disposé sur le panneau avant (1), et le panneau avant (1) est doté d'un orifice d'insertion de vêtements en communication avec un intérieur du tambour de séchage (1) ;
le dispositif de filtrage comprend un élément de filtre annulaire (3), un élément de nettoyage de peluches et un élément de collecte de peluches ; l'élément de filtre annulaire (3) est disposé entre le mécanisme de support avant (2) et le tambour de séchage (4), l'élément de nettoyage de peluches et l'élément de collecte de peluches sont tous deux disposés sur le mécanisme de support avant (2), et l'élément de filtre annulaire (3) est conçu de manière à pouvoir tourner ensemble avec le tambour de séchage (4) ; et
pendant la rotation de l'élément de filtre annulaire (3), l'élément de nettoyage de peluches peut nettoyer les peluches sur l'élément de filtre annulaire (3), et l'élément de collecte de peluches peut collecter les peluches nettoyées,
**caractérisé en ce que** le mécanisme de support avant (2) comprend un premier élément de support (21) et un deuxième élément de support (22) reliés entre eux, l'un au moins parmi le premier élément de support et le deuxième élément de support est disposé sur le panneau avant (1), et l'élément de nettoyage de peluches et l'élément de collecte de peluches sont tous deux disposés sur le deuxième élément de support (22) ; et dans lequel le premier élément de support (21) et le deuxième élément de support (22) forment conjointement une cavité annulaire (23) faisant communiquer un conduit d'air de l'appareil de séchage de vêtements avec l'intérieur du tambour de séchage (4) ; l'élément de filtre annulaire (3) est relié au tambour de séchage (4), et une partie au moins de l'élément de filtre annulaire (3) est disposée à l'intérieur de la cavité annulaire (23).

2. Appareil de séchage de vêtements selon la revendication 1, dans lequel l'élément de filtre annulaire (3) comprend un support de filtre annulaire (31) et un tamis de filtre annulaire (32) disposé sur le support de filtre annulaire (31), le support de filtre annulaire (31) est relié fixement au tambour de séchage (4), et le support de filtre annulaire (31) peut tourner par rapport au mécanisme de support avant (2) lorsqu'il est entraîné par le tambour de séchage (4).

3. Appareil de séchage de vêtements selon la revendication 2, dans lequel le tamis de filtre annulaire (32) comprend une pluralité de tamis de filtre arqués (321), et les tamis de filtre arqués (321) sont encliquetés sur le support de filtre annulaire (31).

4. Appareil de séchage de vêtements selon la revendication 1, dans lequel le deuxième élément de support (22) comprend un cadre de support annulaire (221) relié au premier élément de support (21) et un cadre d'installation (222) disposés sur le cadre de support annulaire (221), et l'élément de nettoyage de peluches et l'élément de collecte de peluches sont tous deux disposés sur le cadre d'installation (222).

5. Appareil de séchage de vêtements selon la revendication 4, dans lequel l'élément de nettoyage de peluches comprend une tige de liaison (51) et un racleur (52) reliés entre eux, la tige de liaison (51) est encliquetée sur le cadre d'installation (222), et le racleur (52) est disposé à proximité de l'élément de filtre annulaire (3) ou contre celui-ci.

6. Appareil de séchage de vêtements selon la revendication 4, dans lequel l'élément de collecte de peluches comprend une boîte de collecte de peluches (6) reliée de façon détachable au cadre d'installation (222), une partie au moins de la boîte de collecte de peluches (6) est disposée à l'intérieur de la cavité annulaire (23), et un orifice de collecte de peluches de la boîte de collecte de peluches (6) se trouve sous l'élément de nettoyage de peluches.

7. Appareil de séchage de vêtements selon la revendication 6, dans lequel une structure de saisie (61) est formée sur une paroi extérieure d'un côté arrière de la boîte de collecte de peluches (6).

8. Appareil de séchage de vêtements selon la revendication 6, dans lequel l'orifice de collecte de peluches est conçu de manière à s'ouvrir progressivement dans une direction s'approchant de l'élément de collecte de peluches.

9. Appareil de séchage de vêtements selon l'une quelconque des revendications 1 à 8, dans lequel l'élément de collecte de peluches se trouve sur une portion gauche ou une portion droite du mécanisme de support avant (2) .
